# EUROPÄISCHE PATENTSCHRIFT

(11) **EP 0 523 352 B1**
(45) Veröffentlichungstag und Bekanntmachung des Hinweises auf die Patenterteilung: **15.03.1995**
(21) Anmeldenummer: 92108657.5
(22) Anmeldetag: 22.05.1992
(51) Int. Cl.: B27B 5/06, B27B 31/00, B65G 47/51

(54) **Etagensammelstation**
Multistorey collecting station
Station de réception à niveaux multiples

(30) Priorität: 30.06.1991 DE 4121517
(43) Veröffentlichungstag der Anmeldung: 20.01.1993
(73) Patentinhaber: Jenkner, Erwin, D-75391 Gechingen (DE)
(72) Erfinder: Jenkner, Erwin, D-75391 Gechingen (DE)
(74) Vertreter: Becker, Maria, Dipl.-Phys.

(56) Entgegenhaltungen:
- DE-A- 3 028 191
- DE-A- 3 111 256
- DE-A- 3 539 115
- DE-C- 3 300 351

## Beschreibung

Die Erfindung betrifft eine Etagensammelstation zum Fördern und Sammeln von Plattenzuschnitten in Verbindung mit einer Buntaufteilsägeanlage, mit wenigstens zwei mit Abstand übereinander angeordneten Etagenrollenbahnen, wobei die Etagenrollenbahnen mittels eines Hublifts vertikal verfahrbar und in die Ebene eines Auslauftisches bringbar sind.

Eine derartige Einrichtung ist aus der DE-OS 33 00 351 bekannt. Diese Druckschrift zeigt eine Vorrichtung zum Zerteilen von Platten mit einer Längssäge und einer Quersäge und einer zwischen diesen vorgesehenen Paternosterstation. In dieser Paternosterstation werden über die Längssäge gesägte Teilstücke zwischengelagert. Hierfür weist die Paternosterstation mehrere Etagenrollenbahnen auf, die über einen Hublift vertikal verfahrbar sind. Nach der Zwischenlagerung werden die Teilstücke dann in Richtung der Quersäge transportiert und weiterverarbeitet.

Als nachteilig hat sich bei einer derart ausgebildeten Vorrichtung herausgestellt, daß sie ausschließlich dafür konzipiert ist, die von der Längssäge längsgesägten Teilstücke aufzunehmen und solange zwischenzulagern, bis sie an die Quersäge weitergegeben werden können. Da die längsgesägten Teilstücke in der Regel jeweils unterschiedliche Abmessungen aufweisen und somit große und kleine Zuschnitte abwechselnd in die Paternosterstation eingeführt werden, ist eine optimale Ausnutzung der einzelnen Etagenrollenbahnen dieser Station nicht gewährleistet. Diese bekannte Paternosterstation dient ausschließlich als von den Zuschnitten längs durchlaufener Puffer.

Der Erfindung liegt daher die Aufgabe zugrunde, eine Vorrichtung der eingangs genannten Art derart auszubilden, daß die einzelnen Etagenrollenbahnen optimal ausgenutzt sind und daher einen geringen Platzbedarf benötigen und außerdem kostengünstig herstellbar und einfach ausgestaltet sind.

Diese Aufgabe wird mittels der Erfindung dadurch gelöst, daß wenigstens ein die von der Buntaufteilsäge über den Auflagetisch einer sich an die Buntaufteilsäge anschließenden Sortier- und Stapelanlage herangeführten Plattenzuschnitte quer zur Einlaufrichtung verlagerndes Transportmittel vorgesehen ist.

Werden über die Längs- und Quersäge die Platten, insbesondere Spanplatten, in einzelne Zuschnitte zersägt und diese Zuschnitte auf der Sortier- und Stapelanlage buntaufgeteilt, so können diese buntaufgeteilten einzelnen Zuschnitte über den Auslauftisch der Sortier- und Stapelanlage in die einzelnen Etagenrollenbahnen der Etagensammelstation eingeführt werden. Beim Ablegen der Zuschnittformate können nun immer gleiche Größen unter Bildung eines Stapels übereinander abgelegt werden. Aus der Vielzahl der verschiedenen Zuschnitteile aus einem Aufteilbild können nun für jede Größe Stapel gebildet werden oder auch auf einem Stapel gleiche Größen nebeneinander gestapelt werden. Mit der erfindungsgemäßen Etagensammelstation können Zuschnitte aus einzelnen Platten oder Zuschnitte von Plattenpaketen gesammelt und gefördert werden.

Die in der Sortier- und Stapelanlage vereinzelten Zuschnittformate laufen auf der Rollenbahn des Auslauftisches in eine Etagenrollenbahn der Etagensammelstation ein. Diese Etagenrollenbahn ist mittels des Hublifts in die Ebene des Auslauftisches verfahren worden, so daß die Zuschnittformate absatzfrei verfahren werden können. Mittels des Transportmittels können nun in die Etagensammelstation einlaufende bzw. eingelaufene Formatzuschnitte quer zur Einlaufrichtung verlagert werden, wodurch vorteilhaft der Platz einer jeden Etagenrollenbahn optimal ausgenutzt wird. Auf diese Weise können mehrere Formatzuschnitte hintereinander und nebeneinander auf einer einzigen Etagenrollenbahn angesammelt werden.

Bei einer bevorzugten Ausführungsform der Erfindung ist das Transportmittel als Schieber ausgebildet. Mittels des Schiebers wird eine einfache Möglichkeit geschaffen, die in die einzelnen Etagenrollenbahnen einlaufenden Plattenformate quer zur Einlaufrichtung zu verlagern. Diese Schieber können pneumatisch, hydraulisch oder elektrisch angetrieben sein.

Bei einer anderen Ausgestaltung der erfindungsgemäßen Etagensammelstation sind die Transportmittel als angetriebene, insbesondere versenkbare Querrollen ausgebildet. Mittels dieser Querrollen, die aus einer versenkten Stellung, in der sie nicht an den Plattenzuschnitten angreifen, in eine ausgefahrene Stellung, in der die Plattenzuschnitte auf ihnen aufliegen, ausfahrbar sind, können diese Plattenzuschnitte quer zur Einlaufrichtung und somit quer zur Laufrichtung der Rollen der Etagenrollenbahn verfahren werden. Bevorzugt sind diese Querrollen motorisch in beide Richtungen antreibbar. Vorteilhaft sind diese Querrollen als Friktionsrollen ausgebildet.

Eine kostengünstige und einfache Ausführungsform des Transportmittels wird mittels eines Schiebers verwirklicht, der vorteilhaft seitlich der Etagenrollenbahn angeordnet ist. Die seitliche Anordnung gewährleistet einen einfachen Zugang zum Transportmittel, insbesondere zu Wartungs- und Reparaturzwecken.

Bei einer Weiterbildung ist vorgesehen, daß das Transportmittel auf der Höhe der Einlaufposition angeordnet ist. Hierdurch wird gewährleistet, daß die einzelnen Plattenzuschnitte bzw. Plattenzuschnittstapel bereits beim Einlauf in die Etagenrollenbahn seitlich verlagert werden, so daß sie hinter den zuvor eingelaufenen Plattenzuschnitt bzw. Zuschnittstapel zu liegen kommen.

Eine über die ganze Länge der Etagenrollenbahn optimale Befüllung mit Plattenzuschnitten wird vorteilhaft dadurch erreicht, daß eine der Einlaufseite gegenüberliegende, den Transport der Plattenzuschnitte verhindernde Verschlußklappe vorgesehen ist. Die einzelnen Plattenzuschnitte bzw. Zuschnittstapel können so weit auf der Etagenrollenbahn transportiert werden, bis ihr Transport mittels der Verschlußklappe verhindert wird. Dabei erstreckt sich die Verschlußklappe über die ganze Breite der Etagenrollenbahn, so daß über sie nicht nur in einer Reihe hintereinander liegende Plattenzuschnitte, sondern auch auf der Etagenrollenbahn nebeneinander liegende Plattenzuschnitte zurückgehalten werden. Dabei kann die Verschlußklappe auf der der Einlaufseite gegenüberliegenden Seite in Höhe eines sich an die Etagensammelstation anschließenden Rollentisches einer Stapeleinrichtung befinden. Bei einer anderen Ausführungsform weist jede Etagenrollenbahn eine Verschlußklappe auf, die dann individuell für jede Etagenrollenbahn gezielt ansteuerbar ist. Diese Verschlußklappen bewegen sich zusammen mit den Etagenrollenbahnen in der vertikalen Richtung, wodurch gewährleistet ist, daß die auf den einzelnen Etagenrollenbahnen sich befindenden Plattenzuschnitte bzw. Zuschnittstapel an einer zu den einzelnen Etagenrollenbahnen fixen Wand anliegen und nicht an einer vertikalen, z.B. am Maschinengestell der Etagensammelstation befestigten Wand entlangschleifen, was zu Beschädigungen führen könnte.

Bevorzugt sind die Verschlußklappen mechanisch oder programmgesteuert betätigbar. Ebenfalls ist das die Plattenzuschnitte quer zur Einlaufrichtung verlagernde Transportmittel programmgesteuert bedienbar. Hierdurch wird die Möglichkeit geschaffen, daß die Etagensammelstation mittels eines Programms vollautomatisch die einzelnen Plattenzuschnitte ansammelt und an die Stapeleinrichtung als komplettes Stapelbild auf eine Palette ablegt.

Zur Automatisierung trägt vorteilhaft auch dazu bei, daß die Etagenrollenbahnen motorisch angetriebene Friktionsrollenbahnen rollenbahnen aufweisen. Aufgrund der Friktionsrollenbahnen können die einzelnen Plattenzuschnitte gegen die Verschlußklappe fahren, ohne daß der Antrieb der Rollen abgeschaltet werden muß. Hierdurch wird die Möglichkeit geschaffen, daß die Transportrollen dieser Etagenrollenbahnen, die keine Plattenzuschnitte tragen, sich weiterdrehen und in Aktion sind. Auf diese Weise können die einzelnen Plattenzuschnitte nacheinander in die Etagenrollenbahnen einlaufen, bis diese über ihre gesamte Länge gefüllt ist. Daraufhin wird der Einlauf gestoppt und das Transportmittel, z.B. der seitliche Schieber, tritt in Aktion.

Bei einer vorteilhaften Ausführungsform ist vorgesehen, daß zwischen den Friktionsrollen der Etagenrollenbahnen Hubeinrichtungen, z.B. in Form von Hubleisten, vorgesehen sind, welche die einlaufenden Plattenformate von den Rollen vor dem seitlichen Versetzen abheben, um eine Beschädigung der Plattenoberfläche beim Versetzen zu vermeiden.

Die Erfindung betrifft auch ein Verfahren zum Ansammeln von aus einer Buntaufteilsägeanlage mit sich anschließender Sortier- und Stapelanlage für das Sortieren und Stapeln der Plattenzuschnitte zugeführten Plattanzuschnitten.

Dabei wird die obengenannte Aufgabe vorteilhaft dadurch gelöst, daß die Plattenzuschnitte in eine der in der Höhe verstellbare Etagenrollenbahnen einer Etagensammelstation nach einem der Patentansprüche 1-11 eingefahren, quer zur Einfahrrichtung verlagert und angesammelt werden, und daß bei voller Etagenrollenbahn oder voller Etagensammelstation die angesammelten Zuschnitte gemeinsam als komplettes Stapelbild z.B. auf eine Palette abgelegt werden.

Dieses erfindungsgemäße Verfahren gewährleistet eine vollautomatische Ansammlung einzelner Plattenzuschnitte gleicher Größe und eine gemeinsame Ausgabe dieser angesammelten Zuschnittstapel.

Weitere Vorteile, Merkmale und Einzelheiten ergeben sich aus der nachfolgenden Beschreibung, in der unter Bezugnahme auf die Zeichnung ein besonders bevorzugtes Ausführungsbeispiel der Erfindung im einzelnen beschrieben ist. Dabei können die in der Zeichnung gezeigten und in der Beschreibung erwähnten Merkmale jeweils einzeln für sich oder in beliebiger Kombination bei der Erfindung verwirklicht sein. In der Zeichnung zeigen:
- Figur 1: eine Seitenansicht der erfindungsgemäßen Etagensammelstation mit einem in eine Etagenrollenbahn eingeführten Plattenzuschnittstapel bzw. Plattenzuschnittstapelreihen;
- Figur 2: die Etagensammelstation gemäß Fig. 1, wobei der Plattenzuschnittstapel bzw. die Plattenzuschnittstapelreihe mittels eines Schiebers quer verschoben ist;
- Figur 3: die Ansicht der Etagensammelstation gemäß Fig. 1 und 2 mit einem weiteren, neben dem ersten Plattenzuschnittstapel bzw. Plattenzuschnittstapelreihe eingeschobenen Plattenzuschnittstapel;
- Figur 4: die Etagensammelstation gemäß Figuren 1 bis 3, mit drei nebeneinander in eine Etagenrollenbahn eingeführte und seitlich zur Anlage gebrachte Plattenzuschnittstapel bzw. Plattenzuschnittstapelreihen;
und
- Figur 5: eine Seitenansicht V gemäß Fig. 4 mit geöffneter Verschlußklappe.

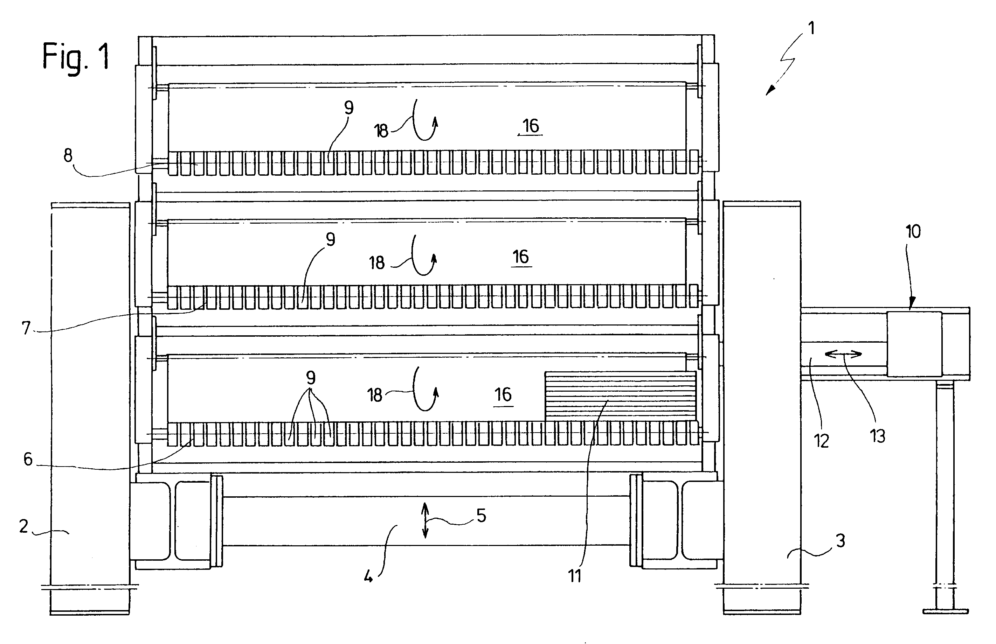

Die Figuren 1 bis 5 zeigen eine insgesamt mit 1 bezeichnete Etagensammelstation in Seitenansicht. Diese Etagensammelstation 1 ist in die Produktionslinie einer nicht gezeigten Vorrichtung zum Sortieren von Platten eingegliedert. Diese Platten oder Plattenstapel werden über eine nicht gezeigte Buntaufteilsägeanlage mit einer Längssäge und einer im rechten Winkel zu dieser angeordneten Quersäge aufgeteilt, wobei durch die Längssäge die Platten in Längsstreifen und danach diese Längsstreifen mittels der Quersäge in die endgültigen Zuschnitte zersägt werden. Wenn die Plattenvorlage, aus der die Zuschnitte auf diese Weise erhalten werden, aus einer einzigen Platte besteht, dann ist jeder Zuschnitt ein Einzelzuschnitt. Wenn dagegen die betreffende Plattenvorlage aus einer Mehrzahl von übereinanderliegenden Platten, also aus einem Plattenpaket besteht, so besteht jeder Zuschnitt aus einer entsprechenden Anzahl von kantengleich übereinanderliegenden Einzelzuschnitten des betreffenden Formats. Im Anschluß an die Buntaufteilsäge befindet sich eine Rollenbahn, welche die aus der Plattenaufteilanlage kommenden Aufteilbilder vereinzelt. Über diesen Auslauftisch laufen die vereinzelten Zuschnittformate in die Etagensammelstation 1 ein. Die Zulaufrichtung entspricht bei den Ansichten gemäß Fig. 1 bis 4 der Blickrichtung.

Die in den Figuren 1 bis 5 gezeigte Etagensammelstation 1 weist im wesentlichen ein Maschinengestell 2 und 3 auf, an dem eine Hubeinrichtung 4 in Richtung des Doppelpfeils 5 vertikal verfahrbar ist. Über diese Hubeinrichtung 4 werden Etagenrollenbahnen 6, 7 und 8 in der Höhe verfahren, wobei mittels der Hubeinrichtung 4 eine jede Etagenrollenbahn 6, 7 oder 8 auf das Niveau des nicht gezeigten Auslauftisches der Sortier- und Stapelanlage gefahren werden kann. In den Figuren sind drei Etagenrollenbahnen 6 bis 8 wiedergegeben, wobei die Erfindung nicht auf drei Etagenrollenbahnen beschränkt sein soll, sondern jede beliebige Anzahl an Etagenrollenbahnen Verwendung finden kann.

Eine jede Etagenrollenbahn 6, 7 oder 8 ist mit motorisch angetriebenen Friktionsrollen 9 ausgestattet. Diese Friktionsrollen 9 sind über die ganze Länge und die ganze Breite der Etagenrollenbahnen 6 bis 8 vorgesehen. Sowohl die Länge als auch die Breite der einzelnen Etagenrollenbahnen 6 bis 8 ist ebenfalls frei wählbar.

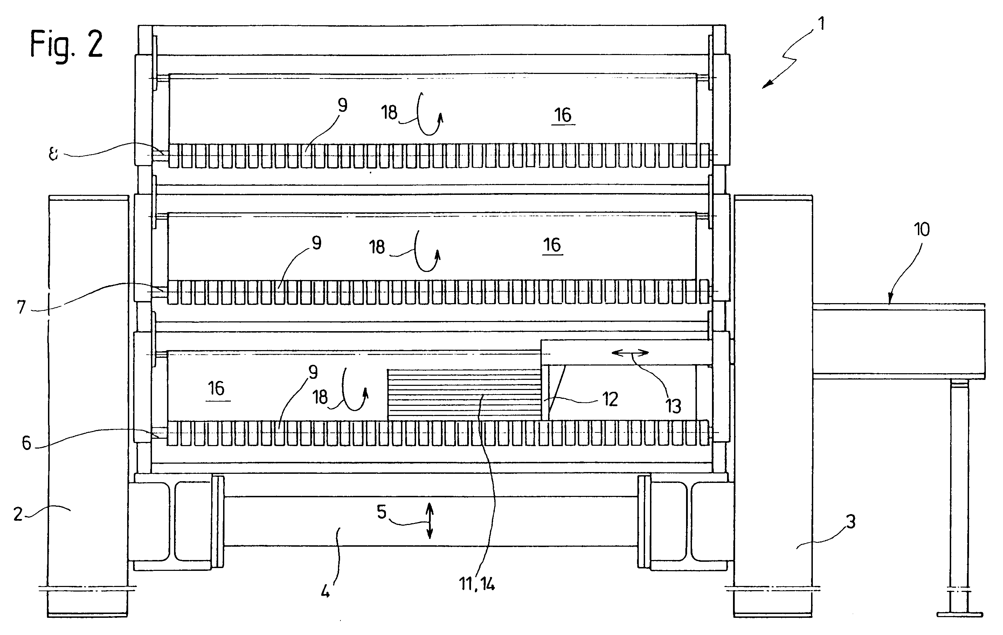

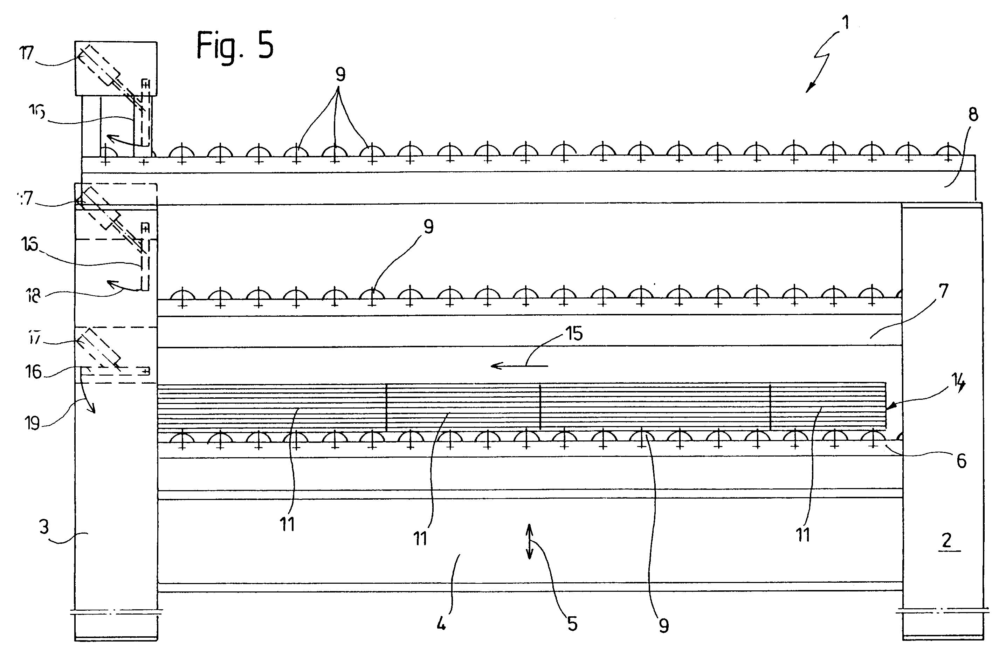

Seitlich neben dem Maschinengestell 3 befindet sich eine Transporteinrichtung 10, mittels der einzelne Plattenzuschnitte bzw. Plattenzuschnittstapel 11 quer zur Einlaufrichtung verschoben werden können. Hierfür weist die Transporteinrichtung 10 einen Schieber 12 auf, der in Richtung des Doppelpfeils 13 verschiebbar ist. Wie aus Fig. 2 ersichtlich, kann mit dem Schieber 12 der Plattenzuschnittstapel 11 quer zur Einlaufrichtung, die der Blickrichtung entspricht, verschoben werden. Der Fig. 5 ist zu entnehmen, daß nicht nur Plattenzuschnittstapel 11, sondern auch ganze Plattenzuschnittstapelreihen 14 mit dem Schieber quer zur Einlaufrichtung, d.h. in Fig. 5 entgegen der Blickrichtung, verschoben werden können. Der Schieber 12 kann über die Transporteinrichtung 10 so angeordnet sein, daß er im Einlaufbereich auf die gerade einlaufenden Plattenzuschnittstapel 11 wirkt, er kann sich jedoch auch über die ganze Länge der jeweiligen Etagenrollenbahn erstrecken, so daß er eine ganze Plattenzuschnittstapelreihe 14 quer zur Einlaufrichtung, die in Fig. 5 mit dem Pfeil 15 angedeutet ist, verschieben kann.

Die in Richtung des Pfeils 15 einlaufenden Plattenzuschnittpakete 11 werden über die Friktionsrollen 9 bis zur Anlage an einer Verschlußklappe 16 vorwärts bewegt. Diese Verschlußklappe 16 erstreckt sich über die ganze Breite einer Etagenrollenbahn, wobei jede Etagenrollenbahn 6 bis 8 eine derartige Verschlußklappe 16 aufweist. Über die Verschlußklappe 16 wird der Weitertransport der einzelnen Plattenzuschnittstapel 11 bzw. Plattenzuschnittstapelreihen 14 verhindert.

Zwischen den Friktionsrollen der Etagenrollenbahnen sind nicht dargestellte Hubeinrichtungen in Form von Hubleisten angeordnet, welche die einlaufenden Plattenformate von den Rollen vor dem seitlichern Versetzen abheben.

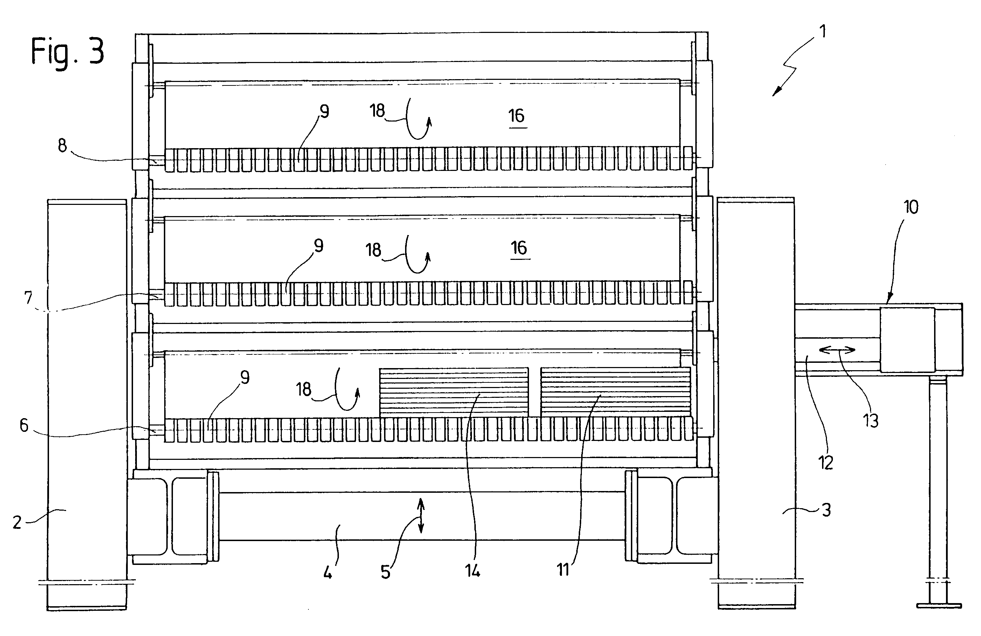

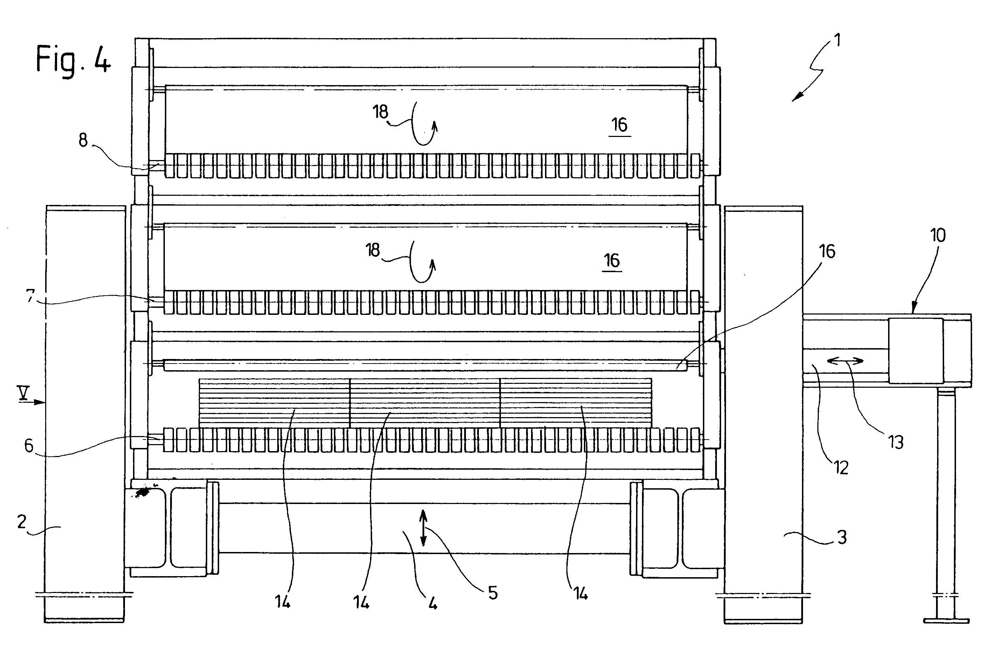

Nachfolgend wird die Funktionsweise der Etagensammelstation 1 erläutert:
Sind mehrere Plattenzuschnittstapel 11 in Einlaufrichtung 15 in eine Etagenrollenbahn 6 eingelaufen und bilden eine Plattenzuschnittstapelreihe 14, so wird diese Plattenzuschnittreihe 14 gemäß Fig. 2 mit einem Schieber quer zur Einlaufrichtung 15 so weit verschoben, daß neben diese Plattenzuschnittstapelreihe 14 sich weitere Plattenzuschnittstapel 11 hintereinander anordnen können und eine zweite Plattenzuschnittstapelreihe bilden können (Fig. 3). Ist dies zweite Plattenzuschnittstapelreihe 14 ebenfalls vollständig, so wird auch diese mittels dem Schieber 12 quer zur Einlaufrichtung 15 verschoben und dadurch Platz für eine dritte Reihe von Plattenzuschnittstapeln 11. Ist auch diese dritte Reihe vollständig, so wird diese mittels des Schiebers 12 an die beiden anderen Plattenzuschnittreihen 14 herangeschoben, bis sie an diesen anliegt. Dieser Zustand ist in Fig. 4 gezeigt, wobei die gegenseitige Anlage der einzelnen Plattenzuschnittreihen 14 nicht unbedingt notwendig ist.

Der oben beschriebene Sammelablauf wurde der Einfachheit halber ausschließlich an der Etagenrollenbahn 6 beschrieben. Es ist selbstverständlich, daß entsprechend einem vorgegebenen Programm alle drei Etagenrollenbahnen 6 bis 8 zu unterschiedlichen Zeiten mit Plattenzuschnittstapeln 11 bestückt werden können, wobei jeweils die entsprechende zu bestückende Stapelrollenbahn mittels der Hubeinrichtung 4 in die Ebene des Auslauftisches der Sortier- und Stapelanlage gefahren wird. Ist auf diese Weise in einer der Etagenrollenbahnen 6 bis 8 eine Plattenzuschnittstapelreihe 14 komplettiert, so wird diese mittels des Schiebers 12 quer verschoben und dadurch Platz für weitere Plattenzuschnittstapel 11 geschaffen, die entweder sogleich oder später eingeführt werden.

Ist die erforderliche Anzahl an Plattenzuschnittstapeln 11 bzw. Plattenzuschnittstapelreihen 14 auf einer Etagenrollenbahn 6, 7 bzw. 8 angesammelt, so wird mittels eines in Fig. 5 als Kolben-Zylinder-Einheit ausgebildeten Linearmotors 17 die Verschlußklappe 16 aus ihrer Schließstellung, die sie bei den Etagenrollenbahnen 7 und 8 einnimmt, in ihre Offenstellung, die sie bei der Etagenrollenbahn 6 einnimmt, verschwenkt. Eine Voraussetzung für das Verschwenken der Verschlußklappe 16 ist, daß die jeweilige Etagenrollenbahn auf das Niveau des sich am Auslauf anschließenden Rollentisches einer Stapeleinrichtung angehoben bzw. abgesenkt ist. Unmittelbar nach dem Verschwenken der Verschlußklappe 16 in Richtung des Pfeils 18 werden die einzelnen Plattenzuschnittstapel 11 bzw. Plattenzuschnittstapelreihen 14 in Richtung des Pfeils 15 aus der Etagensammelstation 11 über die Friktionsrollen 9 heraustransportiert und dadurch die betreffende Etagenrollenbahn entleert. Hat der letzte Plattenzuschnittstapel 11 diese Etagenrollenbahn 6 verlassen, so wird durch Verschwenken der Verschlußklappe 16 in Richtung des Pfeils 19 der Auslauf wieder verschlossen und die Etagenrollenbahn 6 ist bereit zur Neuaufnahme weiterer Plattenzuschnittstapel 11. Dieser Vorgang wiederholt sich entsprechend bei den anderen Etagenrollenbahnen 7 und 8, sobald diese die entsprechende Anzahl an Plattenzuschnittstapeln 11 bzw. Plattenzuschnittstapelreihen 14 angesammelt haben.

Sowohl die Bewegung des Schiebers 12 in Richtung des Doppelpfeils 13, die Bewegung der Hubeinrichtung 4 in Richtung des Doppelpfeils 5 als auch die Betätigung der Verschlußklappe 16 in Richtung der Pfeile 18 und 19 z.B. mittels des Linearmotors 17 oder einer anderen Schließeinrichtung, kann durch ein Programm gesteuert werden, so daß die Arbeit der Etagensammelstation 1 vollautomatisch abläuft. Hierdurch wird nicht nur ein erhebliches Maß an Zeit, sondern auch manuelle Arbeitskraft eingespart.

## Patentansprüche

1. Etagensammelstation (1) zum Fördern und Sammeln von Plattenzuschnitten in Verbindung mit einer Buntaufteilsägeanlage, mit wenigstens zwei mit Abstand übereinander angeordneten Etagenrollenbahnen (6 bis 8), wobei die Etagenrollenbahnen (6 bis 8) mittels einer Hubeinrichtung (4) vertikal verfahrbar und in die Ebene eines Auslauftisches bringbar sind,
**dadurch gekennzeichnet**,
daß wenigstens ein die von der Sägeanlage über den Auslauftisch einer sich an die Sägeanlage anschließenden Sortier- und Stapelanlage herangeführten Plattenzuschnitte quer zur Einlaufrichtung (15) verlagerndes Transportmittel (10) vorgesehen ist.

2. Etagensammelstation nach Anspruch 1, dadurch gekennzeichnet, daß das Transportmittel (10) als Schieber (12) ausgebildet ist.

3. Etagensammelstation nach Anspruch 1 oder 2, dadurch gekennzeichnet, daß das Transportmittel (10) angetriebene, insbesondere versenkbare Querrollen sind.

4. Etagensammelstation nach Anspruch 1 oder 2, dadurch gekennzeichnet, daß das Transportmittel (10) seitlich der Etagenrollenbahn (6, 7 oder 8) angeordnet ist.

5. Etagensammelstation nach einem der vorhergehenden Ansprüche, dadurch gekennzeichnet, daß das Transportmittel (10) auf der Höhe der Einlaufposition angeordnet ist.

6. Etagensammelstation nach einem der Ansprüche 1 bis 4, dadurch gekennzeichnet, daß das Transportmittel (10) sich über die ganze Länge der Etagenrollenbahn (6, 7 oder 8) erstreckt.

7. Etagensammelstation nach einem der vorhergehenden Ansprüche, dadurch gekennzeichnet, daß eine der Einlaufseite gegenüberliegende, den Transport der Plattenzuschnitte verhindernde Verschlußklappe (16) vorgesehen ist.

8. Etagensammelstation nach einem der vorhergehenden Ansprüche, dadurch gekennzeichnet, daß jede Etagenrollenbahn (6 bis 8) eine Verschlußklappe (16) aufweist.

9. Etagensammelstation nach Anspruch 8, dadurch gekennzeichnet, daß die Verschlußklappe (16) manuell oder programmgesteuert betätigbar ist.

10. Etagensammelstation nach einem der vorhergehenden Ansprüche, dadurch gekennzeichnet, daß die Etagenrollenbahnen (6 bis 8) motorisch angetriebene Friktionsrollenbahnen mit Friktionsrollen (9) aufweist.

11. Etagensammelstation nach einem der vorhergehenden Ansprüche, dadurch gekennzeichnet, daß zwischen den Friktionsrollen (9) der Etagenrollenbahnen (6 bis 8) Hubeinrichtungen vorgesehen sind.

12. Verfahren zum Ansammeln von aus einer Sägeanlage mit sich anschließender Sortier- und Stapelanlage zugeführten Plattenzuschnitten, dadurch gekennzeichnet, daß die Plattenzuschnitte in eine der in der Höhe verstellbaren Etagenrollenbahnen einer Etagensammelstation nach einem der Patentansprüche 1-11 eingefahren, quer zu Einfahrrichtung verlagert und angesammelt werden und daß bei voller Etagenrollenbahn oder voller Etagensammelstation die angesammelten Zuschnitte gemeinsam als komplettes Stapelbild z.B. auf eine Palette abgelegt werden.

## Claims

1. Multi-storey collecting station (1) for conveying and collecting panel cuts in combination with a multi-cut dividing saw system having at least two roller conveyors (6 to 8) arranged one above the other, the roller conveyors (6 to 8) being adapted for being displaced in vertical direction by lifting means (4) and being positioned in the plane of a delivery table,
**characterized in that**
there is provided at least one conveyor means (10) for displacing the panel cuts, that are delivered by the sorting and stacking system arranged downstream of the sawing system, in transverse direction to the infeed direction (15).

2. Multi-storey collecting station according to claim 1, characterized in that the conveyor means (10) takes the form of a slide (12).

3. Multi-storey collecting station according to claim 1 or 2, characterized in that the conveyor means (10) is constituted by driven, especially collapsible transverse rollers.

4. Multi-storey collecting station according to claim 1 or 2, characterized in that the conveyor means (10) is arranged laterally of the multi-storey roller conveyor (6, 7 or 8).

5. Multi-storey collecting station according to any of the preceding claims, characterized in that the conveyor means (10) is provided at the level of the infeed position.

6. Multi-storey collecting station according to any of claims 1 to 4, characterized in that the conveyor means (10) extends over the full length of the multi-storey roller conveyor (6, 7 or 8).

7. Multi-storey collecting station according to any of the preceding claims, characterized in that a closure flap (16) is provided opposite the infeed end, to prevent the panel cuts from being transported.

8. Multi-storey collecting station according to any of the preceding claims, characterized in that each multi-storey roller conveyor (6 to 8) is provided with a closure flap (16).

9. Multi-storey collecting station according to claim 8, characterized in that the closure flap (16) can be operated manually or in a program-controlled way.

10. Multi-storey collecting station according to any of the preceding claims, characterized in that the multi-storey roller conveyors (6 to 8) comprise motor-driven friction roller conveyors with friction rollers (9).

11. Multi-storey collecting station according to any of the preceding claims, characterized in that lifting means are provided between the friction rollers (9) of the multi-storey roller conveyors (6 to 8).

12. Method for collecting panel cuts arriving from a sawing system with a downstream sorting and stacking system, characterized in that the panel cuts are fed into one of the vertically adjustable multi-storey roller conveyors of a multi-storey collecting station according to any of claims 1 to 11, are displaced in transverse direction to the infeed direction, and then collected, and that when the multi-storey roller conveyor or the multi-storey collecting station is full, the collected panel cuts are jointly deposited as a complete stack pattern, for example on a pallet.

## Revendications

1. Station collectrice à étages (1) pour le transport et l'assemblage de coupes de panneaux en combinaison avec une installation de délignage et de découpe, avec au moins deux transrouleurs à étages (6 à 8) superposés avec un certain écart, les transrouleurs à étages (6 à 8) étant déplaçables verticalement au moyen d'un dispositif de levage (4) et pouvant être amenés au niveau d'une table de décharge,
**caractérisée en ce que**
au moins un moyen de transport (10) déplaçant les coupes de panneaux, arrivant de l'installation de découpage à travers la table de décharge d'une installation de triage et d'empilement située en aval de l'installation de découpage, transversalement au sens d'introduction (15), est prévu.

2. Station collectrice à étages selon la revendication 1, caractérisée en ce que le moyen de transport (10) est conçu comme coulisseau (12).

3. Station collectrice à étages selon la revendication 1 ou 2, caractérisée en ce que le moyen de transport (10) sont des rouleaux transversaux entraînés, essentiellement escamotables.

4. Station collectrice à étages selon la revendication 1 ou 2, caractérisée en ce que le moyen de transport (10) est disposé au côté du transrouleur à étages (6, 7 ou 8).

5. Station collectrice à étages selon l'une des revendications précédentes, caractérisée en ce que le moyen de transport (10) est disposé au niveau de la position d'introduction.

6. Station collectrice à étages selon l'une des revendications 1 à 4, caractérisée en ce que le moyen de transport (10) s'étend sur toute la longueur du transrouleur à étages (6, 7 ou 8).

7. Station collectrice à étages selon l'une des revendications précédentes, caractérisée en ce que un clapet de fermeture (16) opposé au côté d'introduction et empêchant le transport des coupes de panneaux, est prévu.

8. Station collectrice à étages selon l'une des revendications précédentes, caractérisée en ce que chaque transrouleur à étages (6 à 8) présente un clapet de fermeture (16).

9. Station collectrice à étages selon la revendication 8, caractérisée en ce que le clapet de fermeture (16) peut être actionné à main ou commandé par programme.

10. Station collectrice à étages selon l'une des revendications précédentes, caractérisée en ce que les transrouleurs à étages (6 à 8) présentent des transrouleurs à friction entraînés par moteur avec des rouleaux à friction (9).

11. Station collectrice à étages selon l'une des revendications précédentes, caractérisée en ce que des dispositifs de levage sont prévus entre les rouleaux à friction (9) des transrouleurs à étages (6 à 8).

12. Procéder pour collecter des coupes de panneaux amenées d'une installation de découpage avec en aval une installation de triage et d'empilement, caractérisé en ce que les coupes de panneaux sont introduites dans un des transrouleurs à étages, déplaçables en hauteur, d'une station collectrice à étages selon l'une des revendications 1 - 11, déplacées transversalement au sens d'introduction et collectées et que, si un transrouleur à étages ou une station collectrice à étages est plein, les coupes collectées sont déposées en commun comme pile complète p. ex. sur une palette.
